# EUROPÄISCHE PATENTSCHRIFT

(11) **EP 1 577 651 B1**
(45) Veröffentlichungstag und Bekanntmachung des Hinweises auf die Patenterteilung: **04.04.2007**
(21) Anmeldenummer: 05003389.3
(22) Anmeldetag: 17.02.2005
(51) Int. Cl.: G01J 1/42

(54) **Verwendung eines Photovoltaik-Elementes als Sensor zur Funktionskontrolle von Infrarot-Scheinwerfern von Kraftfahrzeugen**
Use of a photovoltaic element as a sensor for controlling the function of infrared head lamps of a vehicle
Utilisation d'un élémente photovoltaique pour le contrôle de la fonction d'un phare infrarouge d'un vehicule

(30) Priorität: 19.03.2004 DE 102004013985; 17.09.2004 DE 102004045105
(43) Veröffentlichungstag der Anmeldung: 21.09.2005
(73) Patentinhaber: DaimlerChrysler AG, 70567 Stuttgart (DE)
(72) Erfinder: Moisel, Jörg, 89233 Neu-Ulm (DE)

(56) Entgegenhaltungen:
- EP-A- 0 407 166
- DE-A1- 4 208 469
- US-A- 3 914 597
- US-A- 3 966 325
- US-B1- 6 441 896

## Beschreibung

Die Erfindung betrifft die Verwendung eines Photovoltaik-Elementes als Sensor zur Funktionskontrolle von Sendern im infraroten Bereich.

Zur Durchführung von Funktionskontrollen speziell von Scheinwerfern von Kraftfahrzeugen im infraroten Bereich lassen sich übliche Strahlungsmessgeräte einzusetzen. Derartige Photometer haben durchweg nur eine begrenzte Fläche, auf der eine genaue Messung möglich ist. Weiterhin ist eine Messung eher im Bereich kleinerer Leistungen möglich. Die Scheinwerfer im infraroten Bereich spielen in der Anwendung im Kraftfahrzeug bei System zur Verbesserung der Sichtverhältnisse bei Dunkelheit eine Rolle.

Eine weitere Funktionskontrolle der Scheinwerfer ist dadurch gegeben, dass das Kamerabild ausgewertet werden kann. Wenn kein Kamerabild vorhanden ist, kann dabei aber zunächst nicht unterschieden werden, ob der Schweinwerfer oder die Kamera defekt ist. Weiterhin ist es nicht möglich, eine quantitative Messung der Strahlungsleistung des Scheinwerfers vorzunehmen.

Mit Infrarot-Sichtgeräten (Bildumwandlern) sind ebenfalls keine quantitativen Messungen möglich.

Mit bloßem Auge lässt sich die infrarote Strahlung nicht zu Kontrollzwecken wahrnehmen. Aus Sicherheitsgründen sollte der Blick in den Scheinwerfer unbedingt vermieden werden.

Der vorliegenden Erfindung liegt die Problematik zu Grunde, einen Infrarot-Scheinwerfer hinsichtlich seiner Funktion zu testen.

Diese Aufgabe wird nach der vorliegenden Erfindung gelöst durch die Verwendung eines Photovoltaik-Elementes als Sensor zur Funktionskontrolle von Infrarot-Scheinwerfern von Kraftfahrzeugen, wobei das Photovoltaik-Element eine Fläche größer als mehrere 100 cm² aufweist.

Es zeigt sich vorteilhaft, dass ein wirksamer Sensor realisiert werden kann mit begrenztem technischen Aufwand, guter Verfügbarkeit und zu geringen Kosten. Ein Photovoltaik-Element stellt einen großflächigen Sensor dar, mit dem sich problemlos eine größere Fläche von mehreren 100 cm² darstellen lässt. Weiterhin erweist es sich als vorteilhaft, dass für das Messinstrument selbst keine Energieversorgung zur Verfügung gestellt werden muss.

Über diese Fläche kann integrierend gemessen werden, indem die gesamte zur Verfügung stehende elektrisch Leistung gemessen wird. Es ist auch möglich, eine hinsichtlich der einzelnen Raumwinkel präzisierte Messung durchzuführen, wenn das Photovoltaik-Element aus mehreren einzelnen Zellen besteht, deren Signale separat ausgewertet werden.

Die Auswertung kann beispielsweise durch den Anschluss eines einfachen Drehspulinstruments erfolgen. Durch eine geeignete Auswerteelektronik lässt sich ein Signalverhalten erzeugen, bei dem das Ausgangssignal proportional ist zur Strahlungsleistung.

Es können übliche Silizium Solarzellen Verwendung finden.

Es zeigt sich, dass durch die erfindungsgemäße Verwendung ein effektiver Sensor zu günstigen Kosten zur Verfügung gestellt werden kann.

Bei der Verwendung gemäß Anspruch 2 wird der Sensor zur Funktionskontrolle von Infrarot-Scheinwerfern von Kraftfahrzeugen verwendet.

Besonders vorteilhaft zeigt sich hier, dass es sich um einen kostengünstigen Sensor mit einer guten Verfügbarkeit handelt, weil es damit auch möglich wird, die einzelnen Werkstätten mit entsprechenden Sensoren zur Durchführung der Funktionstests auszugestalten.

Bei der beschriebenen Verwendung gemäß Anspruch 3 wird durch eine Blende nur ein Teilbereich des Senders ausgewertet.

Gemäß der beschriebenen Verwendung nach Anspruch 4 ist ein Filter vor dem Photovoltaikelement vorgesehen, das es erlaubt, sichtbares Licht teilweise oder vollständig von dem Auftreffen auf das Photovoltaikelement abzuhalten, wohingegen die infrarote Strahlung ungehindert oder weitgehend ungehindert bzw. wesentliche Teile der infraroten Strahlung ungehindert oder weitgehend ungehindert den Filter durchqueren und auf das Photovoltaikelement treffen können. Dadurch ist sichergestellt, dass eine sehr verlässliche Funktionskontrolle von Sendern im infraroten Bereich gewährleistet ist.

Als besonders vorteilhaft hat sich die Verwendung eines erfindungsgemäßen Photovoltaikelementes bei der Funktionskontrolle von Infrarot-Scheinwerfern für Fahrzeuge bewährt, die regelmäßig einer Überprüfung durch eine Kraftfahzeugwerkstätte bedürfen, wodurch eine noch so geringe Beeinträchtigung anderer Verkehrsteilnehmer durch eine Fehlfunktion der Infrarotscheinwerfer ausgeschlossen oder minimiert ist. Dabei hat sich die Verwendung dieses Photovoltaikelementes zur Funktionskontrolle eines Infrarot-Fahrzeugscheinwerfers besonders bewährt, da diese sehr einfach und sehr robust ausgebildet werden können und dabei eine sehr verlässliche Information über die Funktionsfähigkeit des Fahrzeugscheinwerfers liefern.

Dadurch lässt sich also vorteilhaft auch das Abstrahlprofil hinsichtlich der einzelnen Raumwinkel vermessen.

Ein Ausführungsbeispiel der Erfindung ist in der Zeichnung dargestellt.
Dabei zeigen:
- Fig. 1: eine erste Sensoranordnung zur integralen Messung und
- Fig. 2: eine weitere Sensoranordnung zur Messung des Abstrahlprofils.

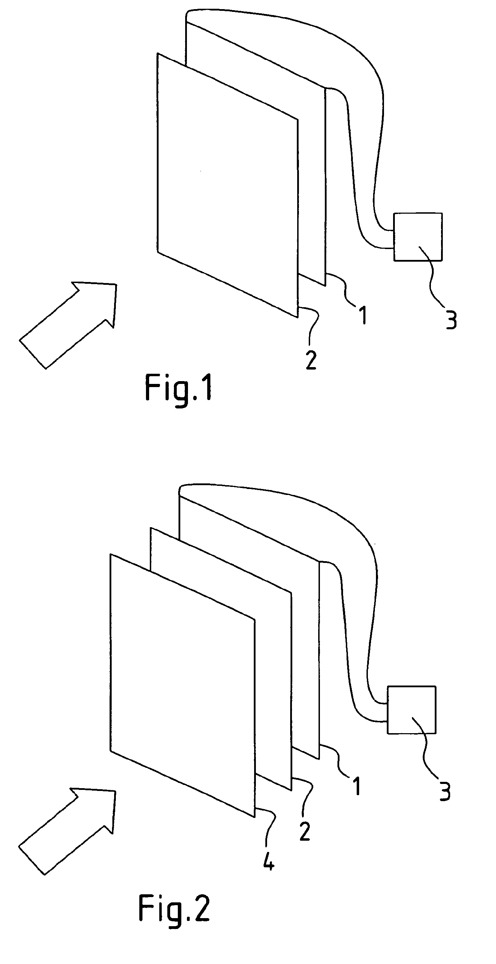

Figur 1 zeigt eine erste Sensoranordnung zur integralen Messung der Strahlungsleistung. Dabei ist ein Photovoltaik-Element 1 zu sehen, das beispielsweise eine normale Silizum-Solarzelle sein kann. Es ist weiterhin vor dem Photovoltaik-Element 1 ein VIS-Filter 2 aus Kunststoff angeordnet, das nur das Licht im infraroten Bereich durchlässt.

An das Photovoltaik-Element 1 ist noch ein Galvanometer 3 angeschlossen.

Mit dem dargestellten Sensorelement lässt sich die Strahlungsleistung eines Infrarot-Scheinwerfers messen. Um eine quantitative Aussage zu machen, muss noch die Entfernung zum Infrarot-Scheinwerfer bekannt sein, um sicher zu stellen, dass die Strahlungsleistung des Scheinwerfers von dem Photovoltaik-Element vollständig erfasst wird.

Figur 2 zeigt eine weitere Sensoranordnung. Dabei ist zusätzlich zur Darstellung der Figur 1 noch eine Blende 4 vorhanden. Durch diese Blende wird nur die abgestrahlte Leistung in einem bestimmten Raumwinkel durchgelassen. Durch eine entsprechende Verschiebung der Blende lassen sich also auch die entsprechenden Daten für verschiedene Raumwinkelbereiche separat erfassen.

## Patentansprüche

1. Verwendung eines Photovoltaik-Elementes (1) als Sensor zur Funktionskontrolle von Infrarot-Scheinwerfern von Kraftfahrzeugen, wobei das Photovoltaik-Element eine Fläche größer als mehrere 100 cm² aufweist.

2. Verwendung nach Anspruch 1,
**dadurch gekennzeichnet,**
**dass** durch eine Blende (4) nur ein Teilbereich des Infrarot-Scheinwerfersausgewertet wird.

3. Verwendung nach Anspruch 1 oder 2,
**dadurch gekennzeichnet,**
**dass** dem Photovoltaikelement (1) ein Filter zugeordnet, der für infrarote Strahlung durchlässig ist und für sichtbares Licht zumindest teilweise undurchlässig ist.

4. Verwendung nach einem der vorstehenden Ansprüche, **dadurch gekennzeichnet,**
**dass** das Photovoltaikelement (1) als Sensor zur Funktionskontrolle von Infrarot-Fahrzeugscheinwerfern im infraroten Bereich verwendet wird.

5. Verwendung nach einem der vorstehenden Ansprüche, **dadurch gekennzeichnet,**
**dass** das Photovoltaikelement (1) mehrere voreinander räumlich getrennte Zellen aufweist, deren Signale getrennt ausgewertet werden und insbesondere eine räumliche Infrarot-Strahlungsverteilung bestimmt wird.

## Claims

1. Use of a photovoltaic element (1) as a sensor for functional monitoring of infrared headlights of motor vehicles, with the photovoltaic element having an area of more than several hundred cm².

2. Use according to Claim 1,
**characterized in that**,
by means of a shutter (4), only a subarea of the infrared headlight is evaluated.

3. Use according to Claim 1 or 2,
**characterized in that**,
the photovoltaic element (1) has an associated filter which is permeable for infrared radiation and is at least partially impermeable for visible light.

4. Use according to one of the preceding claims,
**characterized in that**
the photovoltaic element (1) is used as a sensor for functional monitoring of infrared vehicle headlights in the infrared band.

5. Use according to one of the preceding claims,
**characterized in that**
the photovoltaic element (1) has a plurality of cells which are physically separated from one another and whose signals are evaluated separately and, in particular, a two-dimensional infrared radiation distribution is defined.

## Revendications

1. Utilisation d'un élément photovoltaïque (1) comme détecteur pour le contrôle du fonctionnement de projecteurs à infrarouges de véhicules automobiles, l'élément photovoltaïque présentant une surface supérieure à plusieurs 100 cm².

2. Utilisation selon la revendication 1, **caractérisée en ce que**, grâce à un obturateur (4), seule une zone partielle du projecteur à infrarouges est évaluée.

3. Utilisation selon la revendication 1 ou 2, **caractérisée en ce qu'**à l'élément photovoltaïque (1) est associé un filtre qui est transparent pour le rayonnement infrarouge et qui est au moins partiellement opaque pour la lumière visible.

4. Utilisation selon l'une des revendications précédentes, **caractérisée en ce que** l'élément photovoltaïque (1) est utilisé comme détecteur pour le contrôle du fonctionnement de projecteurs à infrarouges de véhicules dans la plage des infrarouges.

5. Utilisation selon l'une des revendications précédentes, **caractérisée en ce que** l'élément photovoltaïque (1) présente plusieurs cellules séparées les unes des autres dans l'espace dont les signaux sont interprétés séparément et il est notamment déterminé une distribution dans l'espace du rayonnement infrarouge.
